# EUROPEAN PATENT APPLICATION

(11) **EP 1 253 192 A1**
(43) Date of publication of application: **30.10.2002**
(21) Application number: 02008237.6
(22) Date of filing: 18.04.2002
(51) Int. Cl.: C11D 11/00, C11D 3/00, C11D 7/36, C11D 3/37, C11D 7/06

(54) **Anti-scuffing treatment for alkaline bottle washing systems**

(30) Priority: 23.04.2001 US 840351
(71) Applicant: BetzDearborn Inc, Trevose, PA 19053-6783 (US)
(72) Inventor: Falsina, Francesco, 00141 Roma (IT); Cleuren, William G., 3770 Riemst (BE)
(74) Representative: HOFFMANN - EITLE

(57) **Abstract**

The present invention is related to the addition of a specific combination of components that can significantly reduce the adverse impact of the caustic wash solution on the bottle surface of bottles being washed for reuse without compromising the cleaning activity of the wash solutions. The addition of a combination of a polycarboxylic acid and a phosphonic acid to a caustic wash solution significantly decreases the weight loss observed in glass bottles being subjected to a caustic wash procedure.

## Description

### Field of the Invention

The present invention relates to improved alkaline cleaning solutions used in bottle washing systems. More particularly, the present invention relates to additives for alkaline bottle washing solutions, which are effective at reducing chemical attack and the resulting bottle material loss or scuffing which occurs in the washing of bottles with alkaline cleaning solutions.

### Background of the Invention

The use of caustic solutions to wash glass bottles and other reusable food and beverage containers is widespread. For example, glass bottles used for soft drinks and beer are typically washed in an automated system with a caustic wash solution. In many areas, the use of such caustic solutions is controlled by law or industry requirements. The caustic solutions used in such operations can attack the glass surface causing opacity, scratching and loss of material. This phenomenon reduces the number of times the bottles can be reused.

### Detailed Description of the Invention

The washing of glass bottles for reuse is a well-known practice. For example, the washing of glass soft drink and beer bottles for reuse has been well known for many years. Such bottle washing systems are often highly automated and employ a high temperature caustic solution to wash the bottles. In addition to washing the bottles, the high temperature caustic solution can also attack the surfaces of the bottles. This results in scuffing and scratching of the surfaces, which will eventually render the bottles unusable from an aesthetic standpoint. In addition, the high temperature caustic solution can also cause loss of glass resulting in a thinner bottle. Again, this reduces the useful life of the bottles and leads to higher costs associated with un-salable dropout during distribution.

The caustic solutions employed in such bottle washing operations typically comprise 1% to 10% (all percentages stated herein are in weight percent) of caustic, typically, sodium hydroxide. The wash solution may also include antifoaming agents and/or metal corrosion inhibiting additives.

The present invention is directed to the discovery that addition of a specific combination of components can significantly reduce the adverse impact of the caustic wash solution on the glass bottle surface without compromising the cleaning activity of the wash solutions. It was discovered that the addition of a combination of a polycarboxylic acid and a phosphonic acid to a caustic wash solution significantly decreases the weight loss observed in glass beer bottles being subjected to a caustic wash procedure.

The anti-scuffing treatment of the present invention comprises a combination of at least one polycarboxylic acid, the sodium and/or potassium salts thereof and at least one phosphonic acid, the sodium and/or potassium salts thereof. The at least one polycarboxylic acid is preferably polyacrylic acid, having a molecular weight of from about 500-10,000. The at least one phosphonic acid is preferably a phosphonic acid derivative such as hydroxyethylidene diphosphonic acid (HEDP), amino tri(methylene phosphonic acid) (ATMP), 2-phosphono-butane-1,2,4-tricarboxylic acid (PBTC) and hydroxyphosphonoacetic acid (HPA). The most preferred phosphonic acid derivative is HEDP which, like polyacrylic acid, is a "food grade" additives. Food grade additives are acceptable additives for systems handling and treating foods or food containers.

The ratio of polycarboxylic acid to phosphonic acid of the present invention can range from about 1:1 to about 5:1 it is preferably about 2:1. The concentration of the polycarboxylic acid component in the caustic bottle wash solution can range from about 0.0058% to about 0.0233% (w/w). The concentration of the phosphonic acid component in the caustic wash solution can range from about 0.0031% to about 0.0124% (w/w). The treatment of the present invention can be supplied in any convenient form. The treatment components may be supplied in combination or individually. The combination of the present invention is added to a conventional aqueous caustic bottle washing solution.

In a preferred embodiment, the treatment is supplied as an aqueous concentrated solution comprising about 10 to 15 % (w/w) of polyacrylic acid and 5 to 8 % (w/w) of HEDP more preferably, about 12% w/w polyacrylic acid and about 6% w/w HEDP. The preferred concentrated treatment solution can be added to an aqueous caustic wash solution in concentrations ranging from about 0.05% to about 0.2% and preferably from about 0.05% to 0.1%.

It has been found that the addition of the antiscuffing treatment combination of the present invention can significantly reduce the weight loss of glass bottle being cleaned in a hot caustic wash system as well as reduce scuffing and opacity thereby increasing the effective life of the bottle.

The present invention will now be described with respect to specific examples, which are exemplary only, and not to be interpreted as limiting the scope of the attached claims.

### Examples

Glass bottles from a beer brewery were employed in the testing. Weight loss of the bottles placed in an alkaline cleaning solution at 80°C for 24 hours was measured as a representation of the scuffing effect. The makeup water was prepared by diluting local tap water with demineralized water to achieve a calcium hardness equal to 180 ppm as CaCO₃. The caustic cleaning solution was either 2% (w/w) of NaOH or 2% (w/w) NaOH and 1.5% (w/w) of any Na₂CO₃. Beakers of this test solution were prepared with varying concentrations of an antiscuffing treatment comprising a 2:1 ratio of polyacrylic acid, molecular weight of between 100 and 1800 and HEDP. The labels were removed from the bottles and the bottles rinsed in demineralized water, dried overnight in an oven at 105° C and cooled to ambient temperatures before weighing. A pair of bottles was immersed vertically in the test solution. The solutions were covered and maintained at 80° C while gently stirred with a magnetic stirrer for 24 hours. The bottles were removed from the test solutions, washed and rinsed with demineralized water, dried overnight at 105° C cooled to room temperature and weighed.

### Example 1

A test solution of 2% (w/w) NaOH and 1.5% (w/w) Na₂CO₃ was treated with 0.1% (w/w) and 0.2% (w/w) of the preferred combination treatment solution described above comprising about 12% (w/w) polyacrylic acid and about 6% (w/w) HEDP. Table 1 summarizes the weight loss results.

**TABLE 1**

| NaOH (2% w/w) and Na₂CO₃ (1.5% w/w) | | | | |
|---|---|---|---|---|
| **Bottle No.** | **Treatment (% w/w)** | **Weight before (gram)** | **Weight After (gram)** | **Weight Loss (gram)** |
| 1 | -- | 173.9003 | 173.1300 | 0.7703 |
| 2 | -- | 174.0011 | 173.2313 | 0.7698 |
| 3 | 0.1 | 173.8131 | 173.3798 | 0.4333 |
| 4 | 0.1 | 173.6950 | 173.2735 | 0.4215 |
| 5 | 0.2 | 174.6163 | 174.2115 | 0.4048 |
| 6 | 0.2 | 174.5110 | 174.1092 | 0.4018 |

Testing was continued with bottles 1, 2, 5, and 6. Bottles 2 and 6 were placed in a test solution as described in Table 1. Bottle 1 was placed in a test solution containing 0.2% w/w of the preferred treatment combination solution and bottle 5 placed in a solution without treatment. This was done to observe bottles 1 and 5 for any residual or carry over effect from the previous testing. Table 2 summarizes the weight loss results.

**TABLE 2**

| NaOH (2% w/w) and Na₂CO₃ (1.5% w/w) | | |
|---|---|---|
| **Bottle No.** | **Treatment (% w/w)** | **Weight Loss (gram)** |
| 2 | -- | 0.7051 |
| 6 | -- | 0.6970 |
| 1 | 0.2 | 0.0025 |
| 5 | 0.2 | 0.0037 |

The data in Table 2 shows that there was no residual or carry over effect.

The testing was repeated with the same test solutions as set out in Table 1 above. Table 3 summarizes the results. Again, the testing confirmed that for bottles 2 and 5, there was no residual or carry over effect.

**TABLE 3**

| NaOH (2% w/w) and Na₂CO₃ (1.5% w/w) | | |
|---|---|---|
| **Bottle No.** | **Treatment (% w/w)** | **Weight Loss (gram)** |
| 1 | -- | 0.6973 |
| 2 | -- | 0.7065 |
| 3 | 0.1 | 0.0046 |
| 4 | 0.1 | 0.0056 |
| 5 | 0.2 | 0.0741 |
| 6 | 0.2 | 0.0733 |

The test results summarized in Table 1, 2, and 3 show that for untreated wash solutions the weight loss is relatively constant. For wash solutions treated with the treatment combination of the present invention, while there is some variation, in all cases there was a significant decrease in the weight loss for the bottles.

### Example 2

Testing was undertaken in a wash solution of 2% (w/w) NaOH both with and without varying concentrations of the treatment of combination of the present invention described above. The procedure described above in Example 1 was used. Table 4 summarizes the results.

**TABLE 4**

| NaOH (2% w/w) | | |
|---|---|---|
| **Bottle No.** | **Treatment (% w/w)** | **Weight Loss (gram)** |
| 1 | -- | 0.1693 |
| 2 | -- | 0.1745 |
| 3 | 0.05 | 0.0012 |
| 4 | 0.05 | 0.0020 |
| 3 | 0.1 | 0.0038 |
| 4 | 0.1 | 0.0044 |
| 5 | 0.2 | 0.1921 |
| 6 | 0.2 | 0.1904 |
| 4 | 0.4 | 0.1728 |
| 6 | 0.4 | 0.1641 |
| 5 | 0.8 | 0.3002 |
| 6 | 0.8 | 0.3134 |

The Examples show that low dosages of the treatment combination of the present invention can significantly reduce weight loss of glass bottles being cleaned in a hot caustic wash solution.

While the present invention has been described with respect to particular embodiments thereof, it is apparent that numerous other forms and modifications of this invention will be obvious to those skilled in the art. The appended claims and this invention generally should be construed to cover all such obvious forms and modification, which are within a true spirit and scope of the present invention.

## Claims

1. A method cleaning glass bottles comprising washing said glass bottles in an aqueous wash solution comprising:
a. from about 0.0058% to about 0.0233% (w/w) of at least one polycarboxylic acid, the sodium and/or potassium salts thereof;
b. from about 0.0031% to about 0.0124% (w/w) of at least one phosphonic acid, the sodium and/or potassium salts thereof;
c. from about 1 to about 10% (w/w) caustic; and
d. the balance water.

2. The method of claim 1 wherein the ratio of a:b ranges from about 1:1 to about 5:1.

3. The method of claim 1 wherein the ratio of a:b is about 2:1.

4. The method of claim 1 wherein said polycarboxylic acid is polyacrylic acid.

5. The method of claim 4 wherein the molecular weight of said polyacrylic acid ranges from about 500 to about 10,000.

6. The method of claim 1 wherein said phosphonic acid is a phosphonic acid derivative selected from the group consisting of hydroxyethylidene diphosphonic acid, amino tri(methylene phosphonic acid), 2-phosphono-butane-1,2,4-tricarboxylic acid and hydroxyphosphonoacetic acid.

7. The method of claim 1 wherein said phosphonic acid is hydroxyethylidene diphosphonic acid.

8. A method of inhibiting the scuffing of glass bottles being washed with an aqueous caustic wash solution comprising adding to said aqueous caustic was solution from about 0.0058% to about 0.0233% (w/w) of at least one polycarboxylic acid, the sodium and/or potassium salts thereof and from about 0.0031% to about 0.0124 % (w/w) of at least one phosphonio acid.

9. The method of claim 8 wherein the ratio of polycarboxylic acid to phosphonic acid ranges from about 1:1 to about 5:1.

10. The method of claim 8 wherein the ratio of polycarboxylic acid to phosphonic acid is about 2:1.

11. The method of claim 8 wherein said polycarboxylic acid is polyacrylic acid.

12. The method of claim 11 wherein the molecular weight of said polyacrylic acid ranges from about 500 to about 10,000.

13. The method of claim 8 wherein said phosphonic acid is a phosphonic acid derivative selected from the group consisting of hydroxyethylidene diphosphonic acid, amino tri(methylene phosphonic acid), 2-phosphono-butane-1,2,4-tricarboxylic acid and hydroxyphosphonoacetic acid.

14. The method of claim 8 wherein said phosphonic acid is hydroxyethylidene diphosphonic acid.

15. An aqueous concentrated solution comprising about 10 to 15 % (w/w) of at least one polycarboxylic acid and 5 to 8 % (w/w) of at least one phosphonic acid.

16. The use of the aqueous concentrated solution as claimed in claim 15 in the preparation of an aqueous wash solution for cleaning or inhibiting the scuffing of glass bottles.
